# EUROPEAN PATENT SPECIFICATION

(11) **EP 1 197 951 B1**
(45) Date of publication and mention of the grant of the patent: **25.05.2005**
(21) Application number: 01308743.2
(22) Date of filing: 15.10.2001
(51) Int. Cl.: G10L 15/22, H04M 3/493, G01C 21/36, G06F 17/30

(54) **Handling homophones in a spoken query system**
Hanhabung von gleichlautenden Wörtern in einem Sprachabfragesystem
Gestion des homophones dans un système vocal de requêtes

(30) Priority: 16.10.2000 JP 2000315195
(43) Date of publication of application: 17.04.2002
(73) Proprietor: Pioneer Corporation, Meguro-ku, Tokyo (JP)
(72) Inventor: Tamura, Fumio, c/o Pioneer Corporation, Oaza Yamada, Kawagoe-shi, Saitama (JP)
(74) Representative: Haley, Stephen

(56) References cited:
- EP-A- 0 935 123
- ATTWATER D J ET AL: "LARGE-VOCABULARY DATA-CENTRIC DIALOGUES" BT TECHNOLOGY JOURNAL, BT LABORATORIES, GB, vol. 17, no. 1, January 1999 (1999-01), pages 149-159, XP000824588 ISSN: 1358-3948

## Description

This invention relates to a voice recognition apparatus and method for recognizing voice inputted by an user to control a device.

In recent years, an electronic appliance which adopts voice recognition as a man-machine interface has prevailed. An example thereof is a car navigation system. The car navigation system has a function of searching a route from the present position of a motor car to a desired spot specified as a destination and displaying the route as well as a map including the present position, thereby navigating the user's vehicle to the destination.

In the car navigation system, the spot is specified through an audio operation in such a manner that the kind of facility residing at an object spot such as a school, hospital, station, etc. or address of the spot is pronounced as voice sequentially according to a guidance message, and the particular name of the spot, e.g. facility name such as "MEGURO EKI (station)" is eventually specified.

The voice recognition device makes scores of the similarities between a set of recognition words set at present and the pronounced voice such as "MEGURO EKI (station))" and issues the recognition word with the highest similarity as a first candidate.

In this way, where the voice recognition dictionary includes the name with the same reading and very similar names, erroneous recognition is apt to occur. Where the erroneous recognition has occurred, the user must clearly instruct a correcting operation e.g. pronouncing "CHIGAU(incorrect)". This is troublesome for the user.
When the correcting operation is effected, the flow of a series of processing is interrupted. The user may forget the operation now being executed. This made it difficult to use the car navigation system.

Further, where a system is structured in which both of the recognition dictionary with any name registered by the user and the dictionary with the names previously stored can be used, as the case may be, the reading of the name previously stored is the same as that of the name registered by the user. Therefore, the above problem may occur more frequently. This deteriorates the operability of the car navigation system.

This invention has been accomplished in view of the above circumstances, and intends to provide a voice recognition apparatus and method which can be used with good operability when there is the same name and very similar names.

Attwater, DJ et al: "large-vocabulary data-centric dialogues", BT Technology Journal, BT Laboratories, Volume 17, No.1, January 1999, pages 149 to 159 discloses a voice recognition scheme with vocabulary database.

EP-A-0935123 discloses an apparatus and method for retrieving information for use in a vehicle navigation system operated by voice.

In order to solve the above problem, there is provided an apparatus for voice recognition comprising:
voice input means for inputting a voice signal;
spot information memory means in which information relative to spots is stored;
storage means for storing object words indicative of spots within said spot information memory means;
computing means for recognising in the inputted voice signal the object words stored in said storage means;
spot identification means for identifying the spot from the recognised object words indicative of these spots;
characterised in that the apparatus further comprises:
selection means for, when a plurality of spots are identified by said identification means, selecting among the object words indicative of these spots from said spot information memory means a limiting word for distinguishing between said plurality of spots, the limiting word being stored as an object word in said storage means so that said limiting word can be recognised in a voice signal; output means for producing a request message asking a user to input object words in a new voice signal and wherein the limiting word is produced as the request message by said output means.

The voice recognition apparatus may also comprise:
output means for producing a request message urging a user to input the object words; and
the limiting word may be produced as the request message by the output means and the object word corresponding to the limiting word is recognised as voice.

The spot information memory means may store, as information relative to spots, a plurality of facility names and detailed classifying information and rough classifying information to which each facility name belongs which are correlated with each other.

The plurality of object words may be recognised by the recognition means, a limiting word for distinguishing the plurality of object words is sampled from the spot information storage means and stored as the object word in the storage means, and when the plurality of object words are distinguished from one another in terms of rough classifying information, only one at a higher level of the object words corresponding to the limiting word is produced as a request voice by the output means and the object word corresponding to the limiting word is recognised as a voice.

The recognition means may recognise an object word with similarity within a prescribed range, acquired by the computing means, as the recognised object word.

In the configuration described above, since the same name is identified in terms of the range of similarity, it is not necessary to create previously a data base of the same names. This permits the same name processing which does not depend on a combination of recognition dictionaries. Further, in this embodiment, also when there is a narrow margin in the recognition score in the spot name recognition, the same name processing is executed. Therefore, even when the user does not make explicit correction processing, with respect to the similar words, he can answer to the inquiry from the system side. Accordingly, this invention can provide a voice interface which does not hinder the flow of a series of voice operations and gives a comfortable use.

According to the invention, there is also provided a method of voice recognition, the method comprising steps of:
receiving a voice signal;
storing in spot information memory means information relative to spots;
storing object words indicative of spots within said spot information memory means;
recognising in the received voice signal the stored object words;
identifying the spot from the recognised object words indicative of the spot;
characterised in that the method further comprising the steps of:
selecting, when a plurality of spots are identified, among the object words indicative of the spots from the spot information memory means, a limiting word for distinguishing between the plurality of spots, the limiting word having been stored as an object word so that said limiting word can be recognised in a voice signal; and
producing a request message asking a user to input object words in a new voice signal, the limiting word being produced as the request message.

Fig. 1 is a block diagram of an embodiment of the voice recognition apparatus according to this invention.
Fig. 2 is a view showing an example of keywords for limiting used in this invention.
Fig. 3 is a view showing an example of keywords for limiting in a level structure used in this invention.
Fig. 4 is a flowchart for explaining the operation of facility name recognition processing in an embodiment of this invention.
Fig. 5 is a flowchart for explaining the detailed operation of voice recognition processing in the embodiment of this invention.
Fig. 6 is a flowchart for explaining the details of the operation of same name retrieval processing in this embodiment of this invention.
Fig. 7 is a flowchart for explaining the operation of processing of creating keyword for limiting in the embodiment of this invention.
Fig. 8 is a flowchart for explaining the operation of processing of registering a keyword for limiting in the embodiment of this invention.
Fig. 9 is a flowchart for explaining the operation of processing of creating an inquiry message in the embodiment of this invention.
Fig. 10 is a view referred to explain the operation of the embodiment of this invention, which exhibits the contents of a recognition result storage table.
Fig. 11 is a view referred to explain the operation of the embodiment of this invention, which exhibits the contents of a same name number table.
Fig. 12 is a view referred to explain the operation of the embodiment of this invention, which exhibits the contents of a spot information data table.
Fig. 13 is a view referred to explain the operation of the embodiment of this invention, which exhibits the contents of a keyword table for limiting.

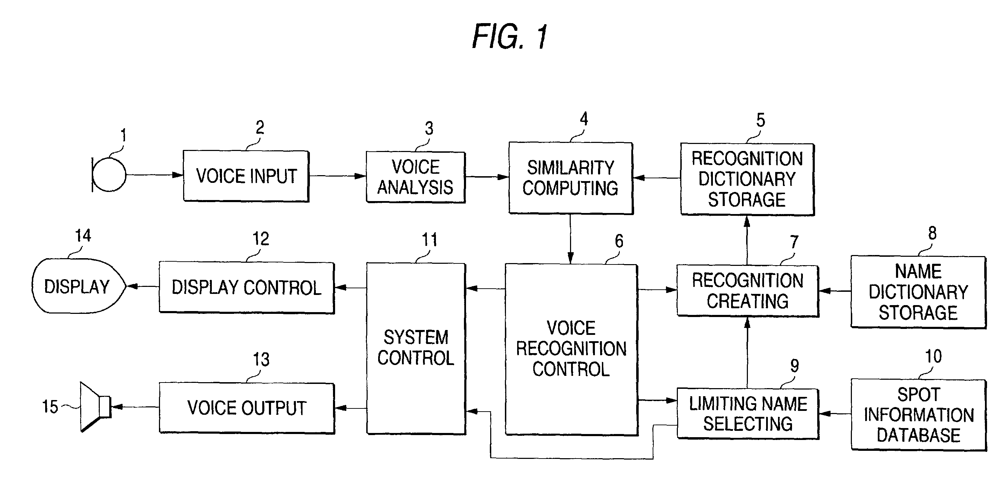

Now referring to the drawings, an explanation will be given of an embodiment of this invention. Fig. 1 is a block diagram of the embodiment of this invention, which shows a voice recognition apparatus used for facility searching in a car navigation system. In Fig. 1, a microphone 1 takes in the voice given by a user. A voice input section 2 receives the voice signal taken in by the microphone 1 and converts it into voice information to be supplied to a voice analysis section 3. The voice analysis section 3 analyzes the supplied voice information as a voice characteristic parameter supplied to a similarity computing section 4.

A name dictionary storage section 8 stores a plurality of voice recognition dictionaries containing a plurality of pieces of reference voice information which constitute a word/phrase to be recognized representative of a spot name indicative of a specified object spot, e.g. facility name residing at the specified object spot. The reference voice information representative of each of the spot names is given a word number.

A recognition dictionary creating section 7 is supplied with basic voice information within the voice recognition dictionary and its word number from the name dictionary storage section 8 or limiting name selecting section 9 described later. The recognition dictionary creating section 7 converts the supplied basic voice information into a word parameter to be subjected to voice recognition processing (voice recognition object word), and supplies the word parameter as well as its word number to a recognition dictionary storage section 5. The recognition dictionary storage section 5 stores the word parameter as well as its word number supplied from the recognition dictionary creating section 7.

A similarity computing section 4 computes the similarities (recognition scores) between the voice characteristic parameter analyzed by the voice analyzing section 3 and all the word parameters stored in the recognition dictionary storage section 5, and supplies the similarities as well as their word numbers to a voice recognition control section 6. The similarity is represented by a recognition score which is inversely proportional to it. The similarity increases as the recognition score decreases. The fact that recognition scores of a plurality of names are very close to one another indicates that their pronunciations are similar.

The voice recognition control section 6 compares the recognition scores to recognize the name with the recognition score not larger than a prescribed value as the name pronounced by the user, and supplies the corresponding word number to the recognition dictionary creating section 7, limiting name selecting section 9 and system control section 11.

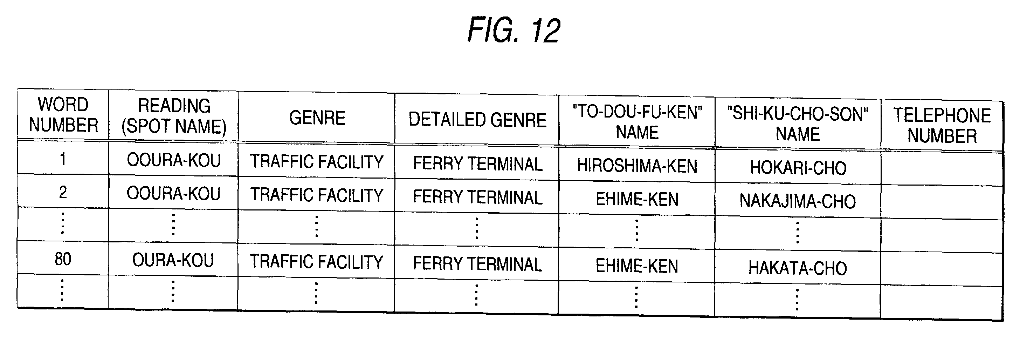

A spot information data base 10 stores varies pieces of information relative to each of spots inclusive of a word number of the spot, a spot name such as the name of a facility residing at the spot, genre of the facility, an area name of the spot, a telephone number, longitude/latitude of the spot, address of the spot, information relative to the facility, etc. The class of the facility residing at the spot, area name of the spot, etc. store the plurality of voice recognition dictionaries having a plurality of pieces of reference voice information which constitute the word/phrase for recognition indicative of a limiting keyword. An example of the spot information table stored in the spot information data base is shown in Fig. 12. In Fig. 12, examples of the spot are (ooura kou (port))" corresponding to word number 1, (ooura kou) corresponding to word number 2, and (oura kou).

The spot information data base 10 is used to acquire the information of the facility residing at the spot after having been determined uniquely in normal spot searching. In accordance with this invention, the spot information data base 10 is also used to create the keyword for limiting. The keyword for limiting is a keyword which is used to reduce the number of a plurality of recognition results by its limitation, e.g. genre of the facility residing at the spot, name of the area where the spot is located.

Incidentally, the name dictionary storage section 8 and the spot information data base 10 constitute a spot information storage section.

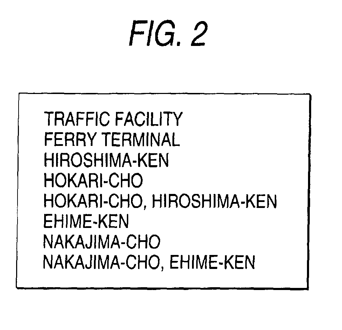

Fig. 2 shows an example of keywords for limiting in the case where the word numbers produced from the voice recognition control section 6 as recognition results are word number 1 corresponding to (ooura kou), and word number 2 corresponding to (ooura kou) shown in Fig. 12. Specifically, Fig. 2 indicates an example of keywords for limiting inclusive of "traffic facility" as a genre name, "ferry terminal" as a sub-genre, "Hiroshima Ken (prefecture)" and "Ehime Ken" as the name of the administrative division of Japan (hereinafter referred to as "to-dou-fu-kenn" in Japanese), "Urakawa Chou" and "Nakajima Chou" as the name of the city, ward, town and village (hereinafter referred to "si-ku-chou-son" in Japanese), and "Hiroshima Ken Hokari Chou" and "Ehime Ken Nakajima Chou" as a coupling name.

When the number of the word numbers produced from the voice recognition control section 6 is single and indicates a spot name, the limiting name selecting section 9 extracts the detailed information relative to the spot name corresponding to the word number from the spot information data base 10 and supplies it to the system control section 11.

On the other hand, where the number of the word numbers produced from the voice recognition control section 6 is plural and the word numbers indicate spot names, referring to the spot information data base 10, with respect to each of the spot names, the limiting name selecting section 9 creates keywords for limiting inclusive of names of the genre, sub-genre, "to-dou-fu-ken", "si-ku-chou-son", and coupling name as shown in Fig. 2. The limiting name selecting section 9 supplies all the keywords thus created as recognition objects to the recognition dictionary creating section 7, and supplies the keyword at the highest level capable of uniquely determining the spot name of the created keywords to the system control section 11.

Incidentally, in the case of the area name, the higher level keyword is a "to-dou-fu-ken" or a district for the "si-ku-chou-son" which is narrow than it, and in the case of the genre name, the higher level keyword is the genre in a rough classifying for the sub-genre in a detailed classifying.

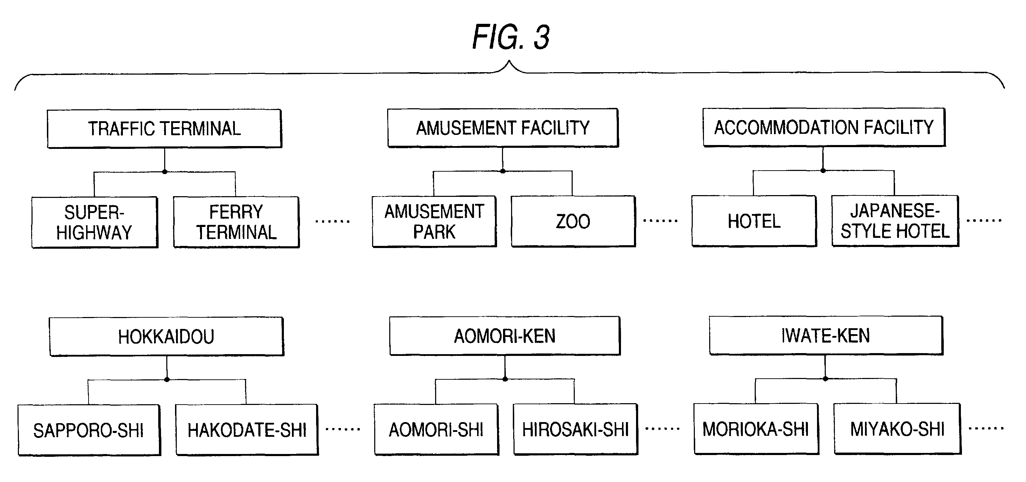

An example of the keywords for limiting in a level structure is shown in Fig. 3. In Fig. 3, the genre name is a traffic facility, an amusement facility, an accommodation, etc. The sub-genre name belonging to the traffic facility is a superhighway, ferry terminal, etc. The sub-genre name belonging to the amusement facility is an amusement park, a zoo, etc. The sub-genre name belonging to the accommodation is a hotel, a Japanese-style hotel, etc. The "to-dou-fu-kenn" name is HOKKAIDO, AOMORI KEN (prefecture), IWATE KEN (prefecture), etc. The "si-ku-chou-son" name belonging to HOKKAIDO is SAPPORO SI (city), HAKODATE SI (city), etc. The "si-ku-chou-son" name belonging to AOMORI KEN is MORIOKA SI (city), MIYAKO SI (city), etc. Incidentally, the genre name and "to-dou-fu-ken" name are not placed in a level structure. However, in this embodiment, the genre is set as a higher level so that it is preferentially produced as a voice output.

On the other hand, where the word number representative of the limiting condition such as the area name or genre name is produced from the voice recognition control section 6, referring to the spot information data base 10, the limiting name selecting section 9 supplies the reference voice information of the spot name residing at the area name or genre name to the recognition dictionary creating section 7 and the system control section 11.

The recognition dictionary creating section 7 converts all the keywords for limiting into the voice recognition dictionary to be transferred to the recognition dictionary storage section 5. When the user pronounces the keyword for limiting, the voice recognition of the keyword for limiting is carried out. The spot name not related to the recognized keyword for limiting is cancelled from the objects to be specified, and only the object spot name provides a spot searching result.

The system control section 11 supplies, to a display control section 12 and a voice producing section 13, the spot name or keyword for limiting corresponding to the word number produced as the recognition result from the voice recognition control section 6, the keyword for limiting at the higher level supplied from the limited name selecting section 9 and the detailed information on the spot name of the recognition result.

The display control section 12 converts the information supplied from the system control section 11 (guidance message asking a user to input the spot name or keyword for limiting corresponding to the word number produced as the recognition result from the voice recognition control section 6 and inquiry message asking the user to input the keyword for limiting at the higher level supplied from the selected name selecting section 9 and the detailed information on the spot name of the recognition result) into display information and controls a display section 12 to display the display information.

A voice producing section 13 converts the supplied from the system control section 11 (guidance message asking to input a user the spot name or keyword for limiting corresponding to the word number produced as the recognition result from the voice recognition control section 6 and inquiry message asking the user to input the keyword for limiting at the higher level supplied from the selected name selecting section 9 and the detailed information on the spot name of the recognition result) into voice information to be sent to a speaker 15.

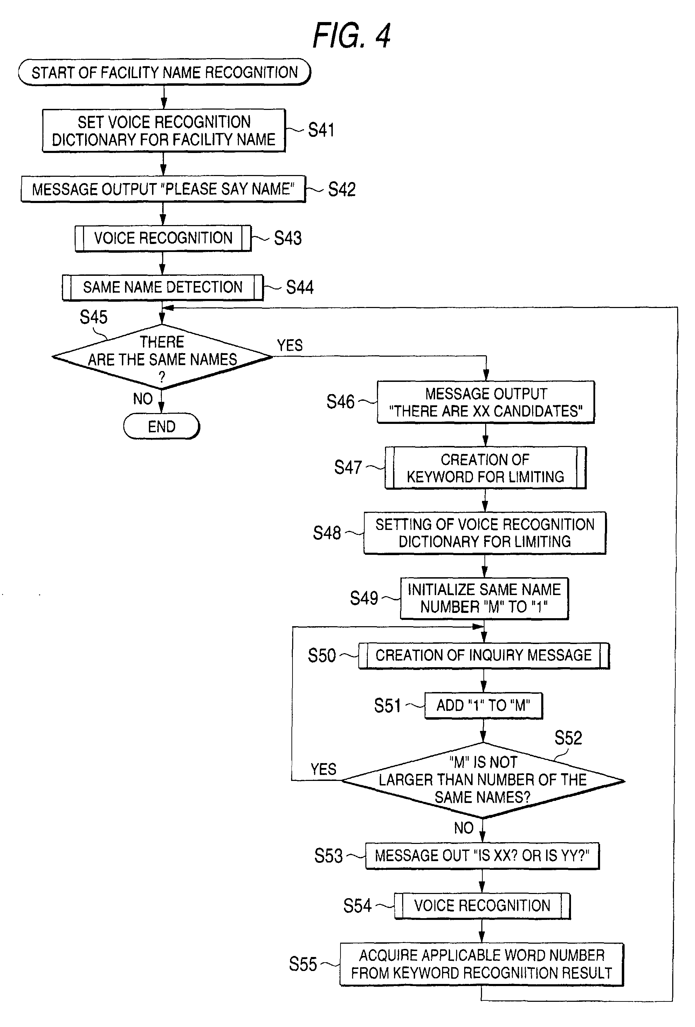

Referring to the flowcharts of Figs. 4 to 9, a more detailed explanation will be given of the operation of an embodiment of this invention shown in Figs. 1 to 3.

Now, in this embodiment, it is assumed that the ferry terminal of (ooura kou) at the Hiroshima Ken Hokari Chou is specified from an example of the same or similar facility names inclusive of the ferry of (ooura kou) at the Hiroshima Ken Hokari Chou, the ferry terminal of (ooura kou) at Ehime Ken Nakajima Chou and the ferry terminal of (oura kou) at Ehime Ken Hekikata Chou, as shown in Fig. 12.

Fig. 4 is a flowchart showing the operation of the voice recognition processing of the facility name which is an example of whole spot names. First, the limiting name selecting section 9 is caused to select the facility names which are present recognition objects from the voice recognition dictionary within the spot information data base 10, the recognition dictionary creating section 7 is caused to covert the facility names into word parameters to be transferred to the recognition dictionary storage section 5 (step S41). Thereafter, a control signal is transmitted to the system control section 11 so that guidance message asking to pronounce "please say the name" is outputted as voice (step S42).

Subsequently, the similarity computing section 4 is caused to compute the similarities between the voice pronounced by the user and all the word parameters within the recognition dictionary storage section 5 to execute the voice recognition for recognizing the facility names (step S43). The recognition results with a lowest recognition score to a prescribed range of score are stored as pronounced voices in the same name number table on the basis of the order of the recognition results in the RAM (not shown) in the voice recognition control section 6 (step S44). If there are a plurality of the same names or similar names, the plurality of facility names are stored in the same name number table.

The number of the words stored in the same name number table is determined (step S45). If there are not the plural words (NO in step S45), the facility name recognition processing is ended. Namely, the facility acquired as the recognition result is transmitted to the system control section 11 so that the recognized facility name is displayed on the map and the detailed information of the facility is displayed. On the other hand, if there are the plurality of words stored (YES in step 45), the processing is shifted to a stage of limiting the same names in the process of step S46 et seq. in which a desired facility is specified from the plurality of facilities.

A control signal as well as the number of words is transmitted to the system control section 11 so that the number of words stored in the same name number table is outputted as guidance message, thereby outputting the message "there are oo candidates" (step S46). Thus, necessity of limiting is conveyed to the user. Further, the word numbers stored in the same name number table are supplied to the limited name selecting section 9. Referring the spot information data base 10, the limitingname selecting section 9 reads the keywords for limiting of the facility names represented by the word numbers and stores them so as to correspond to the word numbers on the table of keywords for limiting (not shown) within the limited name selecting section 9 (step S47). The keywords created by the limited name selecting section 9, after having been converted into the word parameters by the recognition dictionary creating section 7, are transferred to the recognition dictionary storage section 5 (step S48).

The typical keyword for limiting for each of the facilities, which is to be outputted as voice as a inquiry message is selected by the limited name selecting section 9. First, in the limited name selecting section 9, the word numbers stored on the same name number table are sequentially given the same name number (M), and the same name numbers as well as the word numbers stored in a memory (not shown). The same name number (M) is set at "1" (step S49).

The processing is shifted to the processing of creating an inquiry message in which the inquiry message for the word numbers specified with the same name number (M) is selected (step S50). "1" is added to the previous same name number (M) to select the inquiry message for the subsequent facility (Step S51). It is decided whether or not the typical keywords for limiting for all the facilities has been determined by knowing whether or not the same name number (M) has reached the number of words stored in the same name number table (step S52). If the same name number (M) has not reached the number of words stored on the same name number table (YES in step S52), the processing returns to creating the inquiry message in step S50. If the same name number (M) has reached the number of words stored on the same name number table (NO in step S52), the selected keyword for limiting is transmitted to the system control section 11 so that the keyword for limiting selected in step S50 is voice-outputted as inquiry message for each facility (step S53).

The voice recognition processing is executed for the limiting keyword set in step S48 as a recognition object (step S54). On the basis of the recognition result for the limiting keyword and the keyword table for limiting, the corresponding word number is acquired to update the same name number table (step S55). The processing returns to determining the number of words stored in the same name number table in step S45. The steps from step S45 to the step S55 are repeated until the facility names is limited to one.

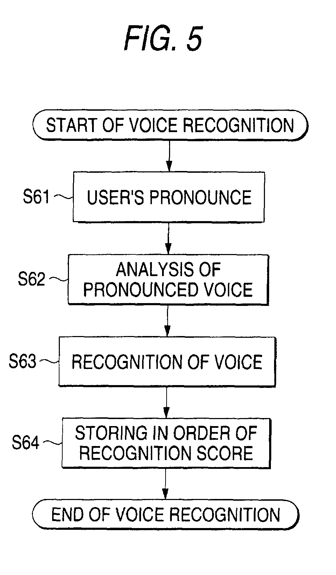

Now referring to the flowchart of Fig. 5, an explanation will be given of the details of the voice recognition processing in steps S43 and S54. First, the voice "oourakou" pronounced by a user through a microphone 1 is detected (step S61). The voice is analyzed by the voice analyzing section 3 to acquire a voice characteristic parameter (step S62). The recognition scores of all the word parameters in the recognition dictionary stored in the recognition dictionary storage section 5 for the voice characteristic parameter thus analyzed are computed and the voice recognition for recognizing the facility name is executed (step S63). The recognition results of the word numbers correlated with the recognition scores are stored in the recognition result table in the RAM (not shown) in the voice recognition control section 6.

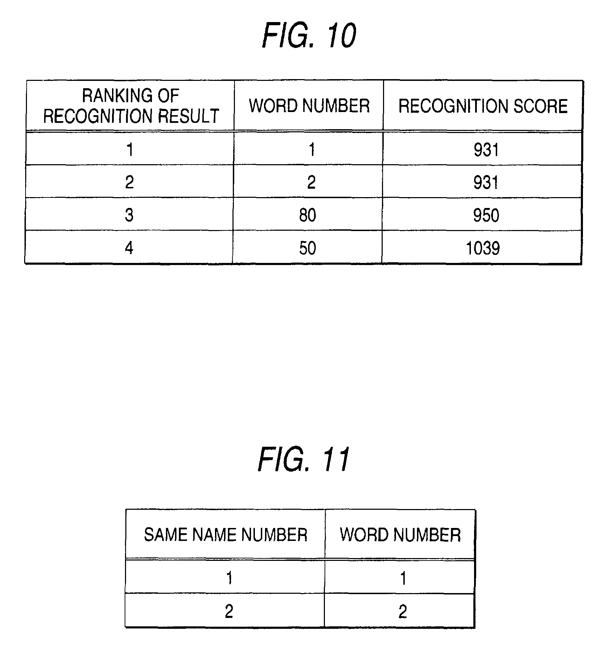

The recognition results in the recognition result storage table are sorted in order of a lower recognition score (step S64). The sorted recognition results of the plural word numbers correlated with the recognition scores at the respective rankings of the recognition results as shown in Fig. 10 are stored in the RAM (not shown) in the voice recognition control 6. Fig. 10 shows the recognition results of word number 1 (oourakou), word number 2 (oourakou), word number 80 (ourakou) and word number 50.

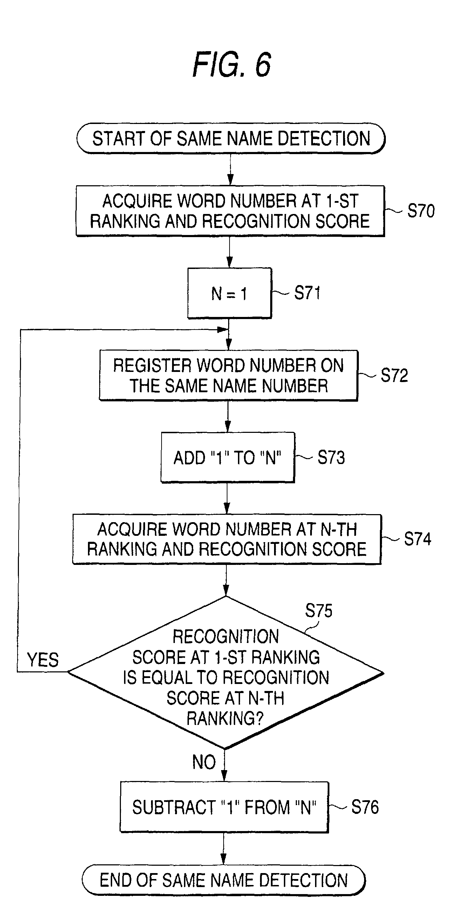

Referring to the flowchart of Fig. 6, an explanation will be given of the same name detection processing in step S44 of Fig.4. Incidentally, it is now assumed that the recognition results as shown in Fig. 10 have been acquired in the voice recognition processing in step S43.

The word number and its recognition score at the first ranking of the recognition results is acquired from the sorted recognition result storage table (step S70). The ranking (N) of the recognition result to be registered is initialized to the first ranking (step S71). The word numbers with N-thranking in the ranking of the recognition results and their recognition scores are stored in the same name number table (step S72). In this way, the word numbers at the first ranking in the ranking of the recognition results are necessarily stored in the same name number table.

"1" is added to the ranking N of the recognition result (step S73). The word number with the N-th ranking and its recognition score are acquired (step S74). It is determined whether or not the difference between the recognition score of the word number with the first ranking and that of the word number with the N-th ranking is within a prescribed score (step S75). If the difference in the recognition score is within the prescribed score (YES in step S75), these word numbers are regarded as the same name word candidates. The processing returns to step S72 in which these word numbers are stored in the same name number table. The processing further proceeds.

If the difference between the recognition score of the word number with the first ranking and that of the word number with the N-th ranking is greater than the prescribed score (NO in step S75), these word numbers are regarded as being not the same name. The processing of detecting the same name detection is ended. Incidentally, in step S75, the difference between the recognition score of the word number with the first ranking and that of the word number with the N-th ranking is within the prescribed score, these word numbers have been regarded as the same name. However, only if their recognition scores are completely equal to each other, these words numbers may be regarded as the same name.

In step S75, "1" is subtracted from N which is the ranking of the recognition results regarded as being not the same name (step S76). The processing of detecting the same name is ended. In step S76, by subtracting 1 from N which is the ranking of the recognition results regarded as being not the same name, the number of words stored in the same name number table is equal to the ranking of N of the recognition results in the processing of detecting the same name. The contents of the same name number table when the processing of detecting the same name has been ended is shown in Fig. 11.

Fig. 11 shows the contents of the same name number table in which (oourakou) of the word number 1 and (oourakou) of the word number 2 are recognized and stored as the same name or similar names.

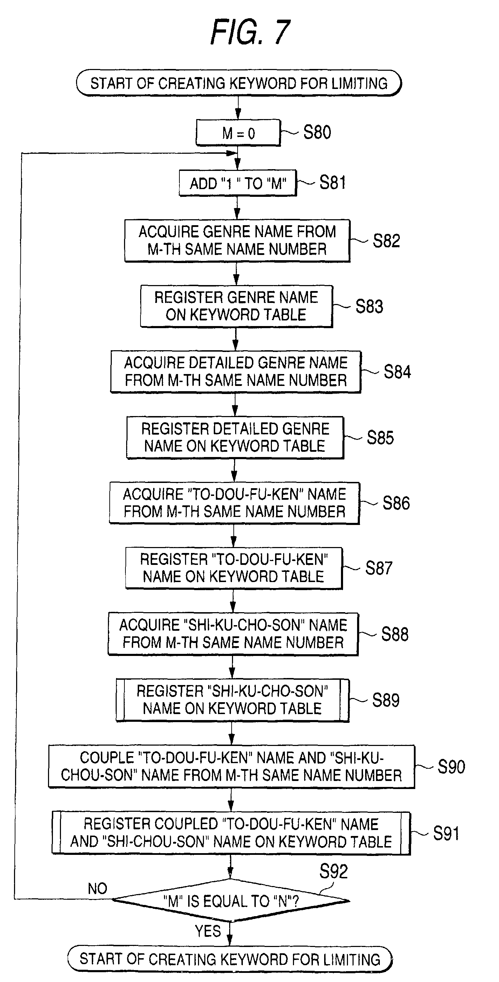

Referring to Fig. 7, an explanation will be given of the details of the processing of creating a keyword for limiting in step S47 in Fig. 4. This processing is to create the keyword for limiting for the facility with the M-th same name number on the same name number table. It is now assumed that the same names as shown in Fig. 11 has been obtained in the same name detecting processing in step S44 of Fig.4.

First, the same name number (M) is initialized to "0" (step S80). Subsequently, "1" is added the same name number (M) (step S81), thereby starting to create the keyword for limiting for the facility of the word number stored with M-th same name number on the same name number table. Referring to the spot information data base 10 of Fig. 12, the genre name of the M-th word number on the same name number table is acquired (step S82).

The spot information data base 10 stores various pieces of information such as the genre, facility, telephone number, etc. The keywords for limiting are structured using the genre name and area name which can be presented more easily as keywords for limiting. In this example, in either case of the same name number M of 1 or 2, the genre name is a traffic facility.

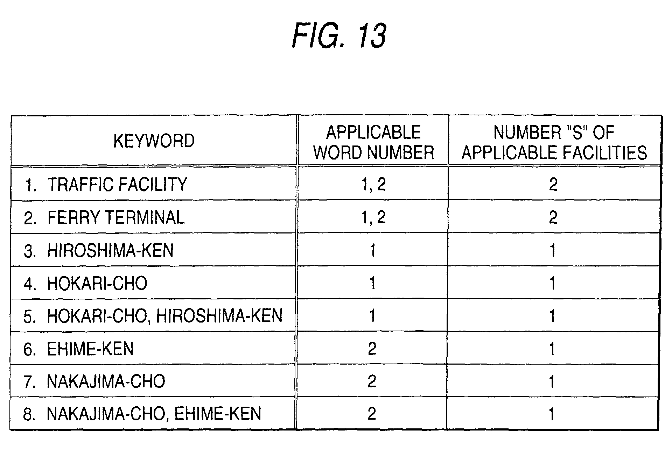

First, the genre name acquired in step S83 is registered as a keyword table for limiting shown in Fig.13 (step S84). Subsequently, like step S82, referring to the spot information data base 10, the sub-genre name of the M-th word number on the same name number table is acquired (step S85). In this example, in either case of the same name number M of 1 or 2, the sub-genre name is a ferry terminal.

The sub-genre name acquired in step S85 is registered on the keyword table for limiting (step S84). Further, likewise, referring to the spot information data base 10, the "to-dou-fu-ken" name of the M-th word number on the same name number table is acquired (step S86). The "to-dou-fu-ken" name acquired in step S86 is registered on the keyword table for limiting (step S87). In this example, in the case of the same name number M of 1, the "to-dou-fu-ken" name is "Hiroshima Ken", and in the case of same name M of 2, the "to-dou-fu-ken" name is "Ehime Ken".

Further, likewise, referring to the spot information data base 10, the "si-ku-chou-son" name of the M-th word number on the same name number table is acquired (step S88). The "si-ku-chou-son" name acquired in step S90 is registered on the keyword-for-limiting table (step S89). In this example, in the case of the same name number M of 1, the city/ward/town/village name is "Hokari chou", and in the case of same name M of 2, the city/ward/town/village name is "Nakajima chou".

The "to-dou-fu-ken" name registered in step S87 and "si-ku-chou-son" name registered in step S88 are coupled (step S90). The coupled name is registered as the keyword for limiting is registered in the keyword-for-limiting table (step S91). In this example, in the case of the same name number M of 1, the coupled name is "Hiroshima-ken Hokari-chou", and in the case of same name M of 2, the coupled name is "Ehime-ken Nakajima-chou".

The same name number (M) on the same name number table and the number N of the words thereon are compared with each other to determine whether or not they are equal to each other (step S92). If equal (YES in step S92), it is decided that the keywords for limiting have been created for the facilities with all the word numbers.

On the other hand, if the same name number (M) and the number N of words are different (NO in step S92), the processing returns to step S81 for continuing to create the keywords for limiting.

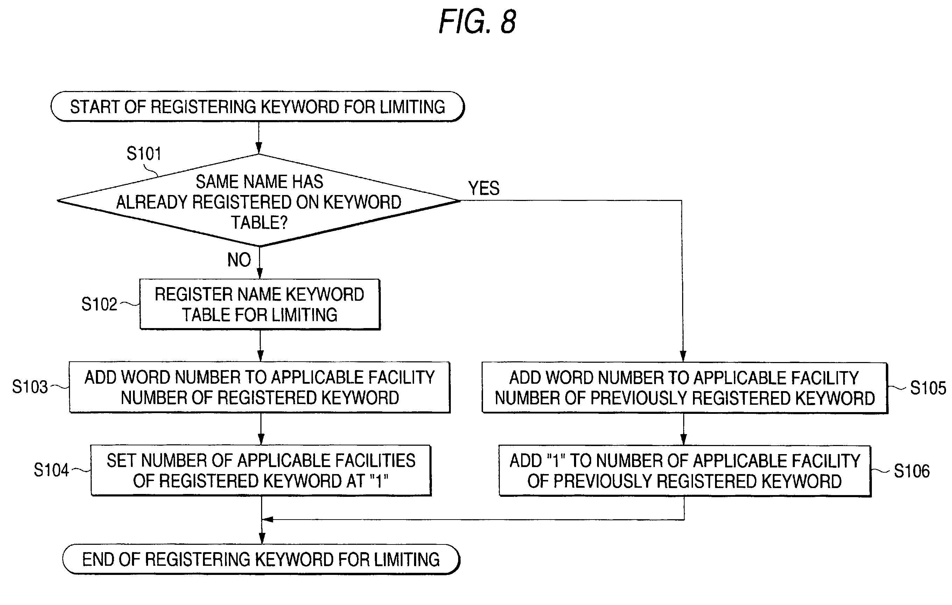

Now referring to the flowchart of Fig. 8, an explanation will be given of the details of the processing of registering the keyword for limiting acquired in each of steps S83, S85, S87, S89 and S91 in Fig. 7 in the keyword-for-limiting table shown in Fig. 13.

The keyword table for limiting stores the one keyword for limiting for each of the keyword numbers (K) which are numbers described at the left ends, word number(s) correlated with the keyword for limiting and number of facilities correlated with the keyword for limiting. First, the keyword field of the keyword table for limiting is retrieved to confirm whether or not the keyword acquired in steps S82, S84, S86, S88 or S90 in Fig. 7 and to be newly registered has been already registered (step S101).

If already registered (YES in step S101), the word number is added to the applicable word number field correlated with the keyword for limiting (step S105), and "1" is added to the number of the applicable facilities in the field of the number of the applicable facilities (step S106), thus ending the processing for registering the keyword for limiting.

If not registered (NO in step S101), the keyword for limiting is registered on the keyword table for limiting (step S102). The word number is newly registered on the column of the applicable word number of the keyword newly registered (step S103). The number of the applicable facilities is initialized to "1" (step S104), thus ending the processing for registering the keyword for limiting.

An example of the keyword table for limiting after the processing of registering the keywords for all the word numbers is shown in Fig. 13.

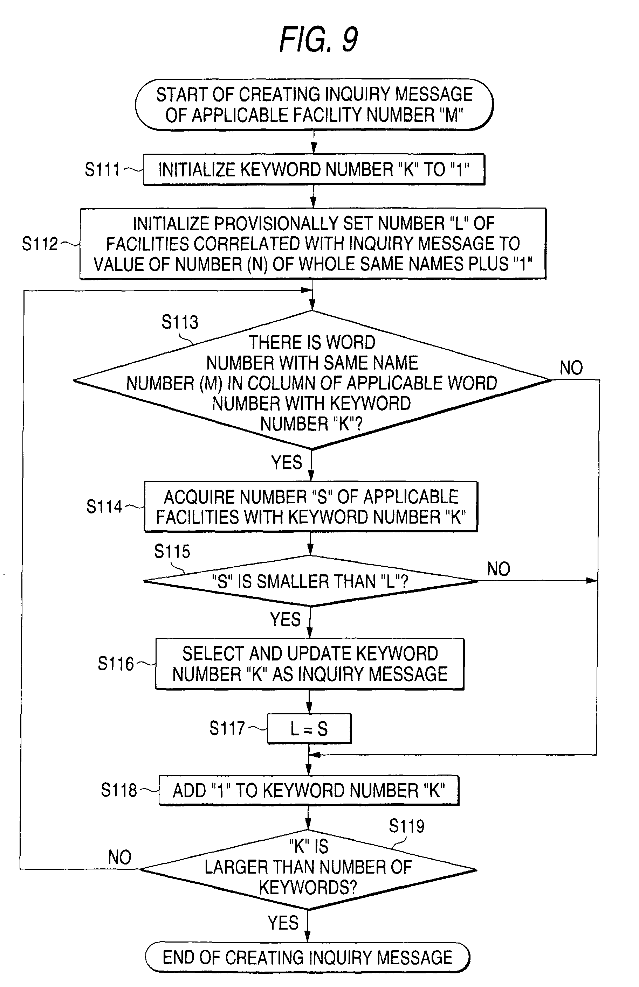

Now referring to the flowchart of Fig. 9, an explanation will be given of the processing of creating an inquiry message for each the same name number (M) in step S50 of Fig.4. Now assuming that the keyword table for limiting as shown in Fig. 13 has been obtained in the processing of creating the keyword in step S47 in Fig. 4, a concrete explanation will be given of the procedure of creating the inquiry message for "oourakou" of "Hirosima Ken" with the same name number (M) of 1.

In order to decide whether or not the message is appropriate as a inquiry message for the same name number (M) in order from the keyword for limiting (k) of "1", the keyword number (K) is initialized to "1" (step S111). In order that the first extracted keyword (now, "traffic facility") for limiting with the keyword number (K) of 1 is necessarily given as an inquiry message, the provisional set number (L) of facilities is initialized to be more by 1 than the number (N) of all the facilities (in this example, "2") with the same name (L = N + 1) (step S112).

It is confirmed whether or not there is the word number (now 1) with the same name number of (M) in the column of the pertinent word number with the keyword number K on the keyword table for limiting (step S113). If there is not (NO in step S113), the processing proceeds to step S118 in order to execute searching for a next keyword number K (now, K = 2). On the other hand, if there is (YES in step S113), the number (S) of the applicable facilities relative to the keyword number(K) is acquired (step S114).

Next, comparison is made on whether or not the number (S) of the applicable facilities is smaller than the provisionally set number (L) of facilities (step S115). If the number (S) of the applicable facilities is not smaller than that of the provisionally set number (L) of facilities (NO in step S115), this means that a more optimum inquiry message than the keyword number (K) has been already selected. The processing proceeds to step S118 in order to execute searching for a next keyword number.

On the other hand, if the If the number (S) of the applicable facilities is not smaller than that of the provisionally set number (L) of facilities (YES in step S115), the keyword with the keyword number (K) is selected as a inquiry message candidate for the same name number (M)(step S116). Where the keyword for the inquiry message with the same name number (M) other than the keyword with the keyword number (K) selected this time has been selected, it is changed to the keyword with the keyword number (K) selected this time. Thus, only one the inquiry message for the same name number (M) is set.

Further, by confirming whether the applicable keyword can be adopted in order from a lower keyword number, the keyword at a higher level can be preferentially set as a inquiry message.

Next, the provisional number of facilities (L) is initialized to the number (S) of the pertinent facilities (step S117). L is incremented by adding 1 of the keyword number (K) (step S118). It is determined whether or not there is the keyword for limiting corresponding to the incremented keyword number (K) on the keyword table for limiting (now, whether or not the incremented keyword number (K) has reached 9) (step S119).

If there is the keyword for limiting corresponding to the incremented keyword number (K) on the keyword table for limiting (NO in step S119), the processing returns to step S113 to confirm whether or not there is the word number with the same name number of (M) in the column of the applicable word number with the keyword number of K on the keyword table for limiting. On the other hand, if there is not the keyword for limiting corresponding to the incremented keyword number (K) on the keyword table for limiting (YES in step S119), it is determined that the processing of all the keyword numbers has been completed.

In the above embodiment, since the genre name and sub-genre at the higher level are the same, they were not adopted as the inquiry message for distinguishing the object facility names from one another. However, since the genre name is set at the higher level, if the facility names can be distinguished in terms of the genre name, the genre name is adopted as the inquiry message.

As understood the description hitherto made, this invention can provide an apparatus and method of voice recognition in which even if there are a plurality of the same names, a single desired spot name can finally specified, and even if there are very similar names, the flow of a series of voice operations is not hindered.

As described above, in accordance with this invention, where there are the same names, the recognition system creates the keyword for limiting the plurality of names and asks a user, and the user announces a keyword for limiting processing. Because of such a configuration, a single desired spot name can be finally specified.

In the embodiment of this invention, since the same name is identified in terms of a recognition score, it is not necessary to create a data base of the same names previously. This permits the same name processing which does not depend on a combination of recognition dictionaries. Further, in this embodiment, also when there is a narrow margin in the recognition score in the spot name recognition, the same name processing is executed. Therefore, even when the user does not make explicit correction processing, with respect to the similar words, he can answer to the inquiry from the system side. Accordingly, this invention can provide a voice interface which does not hinder the flow of a series of voice operations and give a comfortable use.

## Claims

1. An apparatus for voice recognition comprising:
voice input means (2) for inputting a voice signal;
spot information memory means (8, 10) in which information relative to spots is stored;
storage means (8) for storing object words indicative of spots within said spot information memory means;
computing means for recognising in the inputted voice signal the object words stored in said storage means;
spot identification means (4) for identifying the spot from the recognised object words indicative of these spots;
**characterised in that** the apparatus further comprises:
selection means for, when a plurality of spots are identified by said identification means, selecting among the object words indicative of these spots from said spot information memory means (10) a limiting word for distinguishing between said plurality of spots, the limiting word being stored as an object word in said storage means (8) so that said limiting word can be recognised in a voice signal; output means for producing a request message asking a user to input object words in a new voice signal and wherein the limiting word is produced as the request message by said output means.

2. An apparatus for voice recognition according to claim 1, wherein said spot information memory means (8,10) stores, as information relative to spots, a plurality of facility names and both detailed classifying information and rough classifying information, which is less detailed information, to which each facility name belongs and which are correlated with each other.

3. An apparatus for voice recognition according to claim 2, wherein when the plurality of object words are recognised by said identification means (4) a limiting word for distinguishing said plurality of object words is sampled from said spot information memory means (8,10) and stored as an object word in said storage means (8), and when said plurality of object words are distinguished from one another in terms of rough classifying information, only one at a higher level of the object words corresponding to the limiting word is produced as a request voice by said output means so that the limiting word can be recognised as a voice signal.

4. An apparatus for voice recognition according to claim 1, wherein said identification means recognises an object word with similarity within a prescribed range, acquired by said computing means, as the recognised object word.

5. A method of voice recognition, the method comprising steps of:
receiving a voice signal;
storing in spot information memory means (8,10) information relative to spots;
storing object words indicative of spots within said spot information memory means;
recognising in the received voice signal the stored object words;
identifying the spot from the recognised object words indicative of the spot;
**characterised in that** the method further comprising the steps of:
selecting, when a plurality of spots are identified, among the object words indicative of the spots from the spot information memory means, a limiting word for distinguishing between the plurality of spots, the limiting word having been stored as an object word so that said limiting word can be recognised in a voice signal; and
producing a request message asking a user to input object words in a new voice signal, the limiting word being produced as the request message.

## Patentansprüche

1. Vorrichtung zur Spracherkennung, umfassend:
Spracheingabemittel (2) zum Eingeben eines Sprachsignals:
Punktinformationen-Speichermittel (8, 10), in denen punktbezogene Informationen gespeichert werden;
Speichermittel (8) zum Speichern von Zielwörtern (object words), die für Punkte in den Punktinformationen-Speichermitteln indikativ sind;
Rechenmittel, um in dem eingegebenen Sprachsignal die Zielwörter zu erkennen, die in den Speichermitteln gespeichert sind:
Punkt-Identifizierungsmittel (4) zum Identifizieren des Punkts aus dem erkannten Zielwort, das für diese Punkte indikativ ist;
**dadurch gekennzeichnet, dass** die Vorrichtung des Weiteren umfasst:
Auswahlmittel, um, wenn eine Vielzahl von Punkten durch das Identifizierungsmittel identifiziert wird, aus den Zielwörtern, die für diese Punkte aus dem Punktinformationen-Speichermittel (10) indikativ sind, ein einschränkendes Wort zum Unterscheiden zwischen der Vielzahl von Punkten auszuwählen, wobei das einschränkende Wort als ein Zielwort in den Speichermitteln (8) gespeichert ist, so dass das einschränkende Wort in einem Sprachsignal erkannt werden kann;
Auswahlmittel zum Erzeugen einer Anforderungsmeldung, die einen Benutzer auffordert, Zielwörter in einem neuen Sprachsignal einzugeben, und worin das einschränkende Wort als die Anforderungsmeldung durch die Ausgabemittel erzeugt wird.

2. Vorrichtung zur Spracherkennung nach Anspruch 1, wobei die Punkinformationen-Speichermittel (8, 10) als punktbezogene Informationen eine Vielzahl von Leistungsmerkmal-Bezeichnungen (facility names) und sowohl klassifizierende Informationen als auch grob klassifizierende Informationen speichert, die weniger ausführliche Informationen sind, zu denen jede Leistungsmerkmal-Bezeichnung gehört, und die miteinander in Beziehung stehen.

3. Vorrichtung zur Spracherkennung nach Anspruch 2, wobei, wenn die Vielzahl von Zielwörtem durch das Identifizierungsmittel (4) erkannt wird, ein einschränkendes Wort zum Unterscheiden der Vielzahl von Zielwörtem aus den Punktinformationen-Speichermitteln (8, 10) entnommen und als ein Zielwort in dem Speichermittel (8) gespeichert wird, und wenn die Vielzahl der Zielwörter voneinander im Hinblick auf grob klassifizierende Informationen voneinander unterschieden worden ist, wird nur eines auf einer höheren Ebene der Zielwörter, das dem einschränkenden Wort entspricht, als eine Anforderungssprache durch das Ausgabemittel erzeugt, so dass das einschränkende Wort als ein Sprachsignal erkannt werden kann.

4. Vorrichtung zur Spracherkennung nach Anspruch 1, wobei das Identifizierungsmittel ein Zielwort mit Ähnlichkeit innerhalb eines vorgegebenen Bereichs, das durch die Rechenmittel erhalten wird, als das erkannte Zielwort erkennt.

5. Verfahren zur Spracherkennung, wobei das Verfahren folgende Schritte umfasst:
Empfangen eines Sprachsignals;
Speichern von punktbezogenen Informationen in Punktinformations-Speichermitteln (8, 10);
Speichern von Zielwörtern, die für Punkte in den Punktinformations-Speichermitteln indikativ sind;
Erkennen der gespeicherten Zielwörter in dem empfangenen Sprachsignal;
Identifizieren des Punkts aus den erkannten Zielwörtern, die für den Punkt indikativ sind;
**dadurch gekennzeichnet, dass** das Verfahren des Weiteren die folgenden Schritte umfasst:
Auswählen, wenn eine Vielzahl von Punkten identifiziert ist, aus den für Punkte in den Punktinformations-Speichermitteln indikativen Zielwörtern eines einschränkenden Worts zum Unterscheiden zwischen der Vielzahl von Punkten, wobei das einschränkende Wort als ein Zielwort gespeichert ist, so dass das einschränkende Wort in einem Sprachsignal erkannt werden kann; und
Erzeugen einer Anforderungsmeldung, die einen Benutzer auffordert, Zielwörter in einem neuen Sprachsignal einzugeben, wobei das einschränkende Wort als die Anforderungsmeldung erzeugt wird.

## Revendications

1. Appareil pour reconnaissance de la parole comprenant :
un moyen (2) d'entrée de parole destiné à entrer un signal de parole ;
un moyen (8, 10) de mémoire d'information de lieux dans lequel est mémorisée de l'information relative à des lieux ;
un moyen (8) de mémorisation destiné à mémoriser des mots-objectifs représentatifs de lieux à l'intérieur dudit moyen de mémoire d'information de lieux ;
un moyen de traitement de l'information destiné à reconnaître dans le signal de parole entré les mots-objectifs mémorisés dans ledit moyen de mémorisation ;
un moyen (4) d'identification de lieu destiné à identifier le lieu à partir des mots-objectifs représentatifs de ces lieux ;
**caractérisé en ce que** l'appareil comprend en outre :
un moyen de choix destiné, lorsqu'une pluralité de lieux est identifiée par ledit moyen d'identification, à choisir parmi les mots-objectifs représentatifs de ces lieux issus dudit moyen (10) de mémoire d'information de lieux, un mot de limitation destiné à faire la distinction entre ladite pluralité de lieux, le mot de limitation étant mémorisé comme un mot-objectif dans ledit moyen (8) de mémorisation de sorte que ledit mot de limitation peut être reconnu dans un signal de parole ; un moyen de sortie destiné à produire un message de demande demandant à un utilisateur d'entrer des mots-objectifs dans un nouveau signal de parole et dans lequel le mot de limitation est produit comme message de demande par ledit moyen de sortie.

2. Appareil de reconnaissance de la parole selon la revendication 1, dans lequel ledit moyen (8, 10) de mémoire d'information de lieux mémorise, comme information relative aux lieux, une pluralité de noms d'établissement et, à la fois, de l'information de classification détaillée et de l'information de classification grossière, qui est de l'information moins détaillée, auxquelles se rapporte chaque nom d'établissement, et qui sont corrélées l'une à l'autre.

3. Appareil de reconnaissance de la parole selon la revendication 2, dans lequel lorsque la pluralité de mots-objectifs est reconnue par ledit moyen (4) d'identification, un mot de limitation destiné à distinguer ladite pluralité de mots-objectifs est échantillonné à partir dudit moyen (8, 10) de mémorisation d'information de lieux et est mémorisé comme mot-objectif dans ledit moyen (8) de mémorisation, et lorsque les mots de ladite pluralité de mots-objectifs ont été distingués les uns des autres par l'information de classification grossière, seulement l'un, à un niveau supérieur, des mots-objectifs correspondant au mot de limitation est produit comme parole de demande par ledit moyen de sortie de sorte que le mot de limitation peut être reconnu comme un signal de parole.

4. Appareil de reconnaissance de la parole selon la revendication 1, dans lequel ledit moyen d'identification reconnaît un mot-objectif avec une certaine similarité à l'intérieur d'une plage imposée, acquise par ledit moyen de traitement de l'information, comme étant le mot-objectif reconnu.

5. Procédé de reconnaissance de la parole, le procédé comprenant les étapes :
de réception d'un signal de parole ;
de mémorisation, dans un moyen (8, 10) de mémoire d'information de lieux, d'information relative à des lieux ;
de mémorisation de mots-objectifs représentatifs de lieux, dans ledit moyen de mémoire d'information de lieux ;
de reconnaissance, dans le signal reçu de parole, des mots-objectifs mémorisés ;
d'identification du lieu à partir des mots-objectifs reconnus représentatifs du lieu ;
**caractérisé en ce que** le procédé comprend en outre les étapes :
de choix, lorsqu'une pluralité de lieux est identifiée, parmi les mots-objectifs représentatifs des lieux issus du moyen de mémoire d'information de lieux, d'un mot de limitation destiné à faire la distinction entre la pluralité de lieux, le mot de limitation et ayant été mémorisé comme un mot-objectif de sorte que ledit mot de limitation peut être reconnu dans un signal de parole ; et
de production d'un message de demande demandant à un utilisateur d'entrer des mots-objectifs dans un nouveau signal de parole, le mot de limitation étant produit en tant que message de demande.
